# EUROPEAN PATENT APPLICATION

(11) **EP 3 276 804 A1**
(43) Date of publication of application: **31.01.2018**
(21) Application number: 17250007.6
(22) Date of filing: 26.07.2017
(51) Int. Cl.: H02K 51/00, H02K 7/116, H02K 7/18, H02K 16/00, F03B 17/06

(54) **AN APPARATUS FOR GENERATING ELECTRICITY**

(30) Priority: 26.07.2016 GB 201612913
(71) Applicant: Curtis-Bird, Richard Arthur Howard, Luton, Bedfordshire LU4 0LS (GB)
(72) Inventor: Curtis-Bird, Richard Arthur Howard, Luton, Bedfordshire LU4 0LS (GB)
(74) Representative: Franks & Co (South) Limited

(57) **Abstract**

An electrical generator apparatus is disclosed. The generator comprises a sub-assembly comprising a primary electrical generator operable to generate an electrical current and a plurality of secondary electrical generators, each of the plurality of secondary electrical generators operable to generate an electrical current; and further comprises an electric motor apparatus. The primary electrical generator is operable to supply electrical current to an input of the electric motor apparatus, and the electric motor apparatus is in turn operable to operate each of the plurality of secondary electrical generators.

## Description

### BACKGROUND OF THE INVENTION

### 1. Field of the Invention

The present invention relates to an apparatus for generating electricity.

### 2. Description of the Related Art

It is known to use hydro-electric turbines to generate electricity. Such turbines typically comprise a turbine rotor assembly which is immersed in a body of flowing water and coupled to the rotor of an electrical generator. Hydro-electric turbines present a source of 'low-carbon' electricity, inasmuch that useful energy is extracted from naturally occurring bodies of flowing water, for example, inland rivers or tidal water flows.

Such methods of electricity generation are well known but incur a number of significant problems. In the first instance, hydro-electric generators of the prior art can be ineffective in their harnessing of kinetic energy contained in a flow of water, and tend to be relatively inefficient in their conversion of that kinetic energy harnessed into electrical energy. Moreover, hydro-electric generators of the prior art tend to be suited to producing only a single electrical current output, whilst in certain circumstances it may be desirable for a generator of the type to produce a plurality of discrete electrical currents outputs.

### BRIEF SUMMARY OF THE INVENTION

According to a first aspect of the present invention, there is provided an apparatus for generating electricity, comprising: a generator sub-assembly, said sub-assembly comprising: a primary electrical generator operable to generate an electrical current; a plurality of secondary electrical generators, each of said plurality of secondary electrical generators operable to generate an electrical current; and an electric motor apparatus; wherein: said primary electrical generator is operable to supply electrical current to an input of said electric motor apparatus, which electric motor apparatus is in turn operable to operate each of said plurality of secondary electrical generators.

Preferably the power rating of said primary electrical generator is greater than the power rating of each of said plurality of secondary electrical generators.

Preferably said electric motor apparatus comprises an outer-rotor type electric motor.

Preferably said outer-rotor type electric motor comprises an annular stator core arranged about said primary electrical generator, and an annular rotor housing disposed radially outwards with respect to the stator.

Preferably each of said plurality of secondary electrical generators comprise a drive wheel rotationally coupled to a respective generator rotor.

Preferably an outer circumference face of said rotor housing is configured to engage an outer circumference face of respective drive wheels of said plurality of secondary electrical generators.

Preferably said electric motor apparatus comprises an outer-rotor type alternating current induction motor.

Preferably said apparatus further comprises a turbine sub-assembly.

Preferably said turbine sub-assembly comprises a water-responsive rotor assembly.

Preferably said water-responsive rotor assembly comprises an Archimedean screw.

Preferably said turbine sub-assembly further comprises a drive mechanism operatively coupled to an output shaft of said rotor assembly and operatively coupled to an input shaft of said primary electric generator.

Preferably said drive mechanism comprises a roller chain.

Preferably said apparatus further comprises a support structure for supporting said generator sub-assembly.

Preferably said apparatus is configured as a hydro-electric generator.

Preferably said support structure comprises a base portion for attachment to a stable body, and a mast portion extending from said base portion to support the generator sub-assembly above a water-line and the turbine sub-assembly below said a water-line.

### BRIEF DESCRIPTION OF THE DRAWINGS

The invention will now be described by way of example only with reference to the accompanying drawings, which are purely schematic and not to scale, of which:
Figure 1A is an illustration of an exemplary environment in which the present invention can be deployed;
Figure 1B shows an alternative view of the environment illustrated in Figure 1A;
Figure 2A shows the apparatus of Figure 1 in perspective view;
Figure 2B shows the apparatus of Figure 2A in an end elevation view;
Figure 2C shows the apparatus of Figure 2B in a side elevation view;
Figure 3A shows the apparatus of previous Figures in an end cross-sectional view;
Figure 3B shows the apparatus of previous Figures in a side cross-sectional view;
Figure 4A shows the generator sub-assembly in an end cross-sectional view;
Figures 4B shows the generator sub-assembly in a side cross-sectional view.

### DETAILED DESCRIPTION OF EXAMPLE EMBODIMENTS

### Figures 1A & 1B

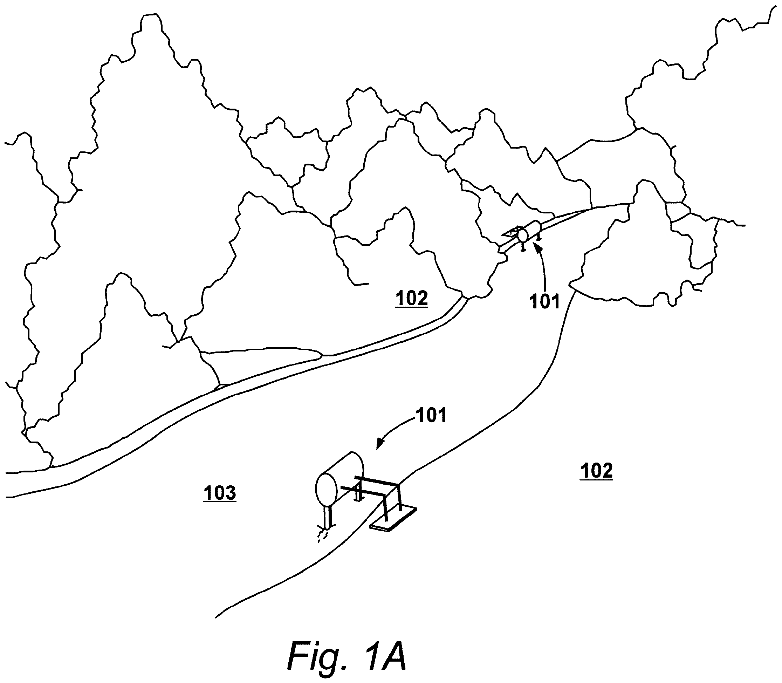

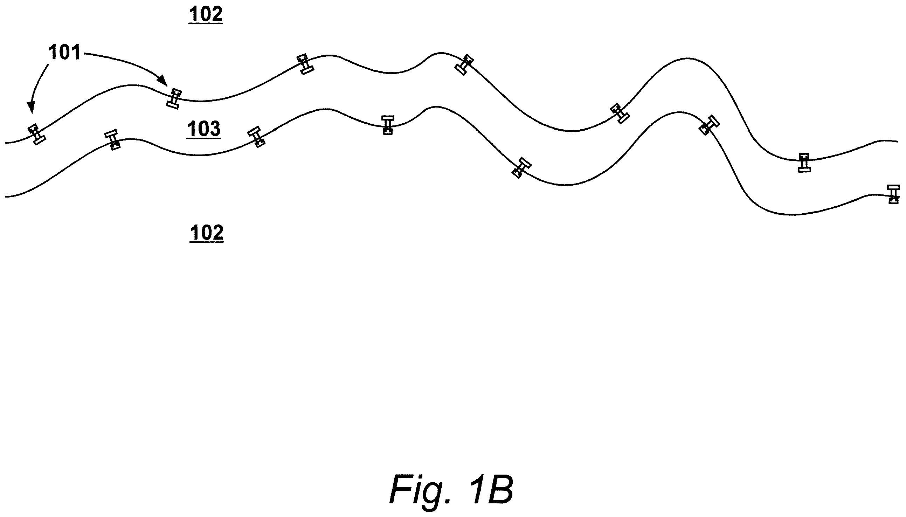

An example of the environment in which the present invention can be used is shown in Figures 1A and 1B. In the example, a plurality of apparatus for generating electricity 101 according to a specific embodiment of the present invention are shown installed on the banks 102 of a river 103, each of the apparatus 101 being partially immersed in the river 103.

Referring particularly to Figure 1B, it is seen that a plurality of like apparatus 101 may be installed in spaced intervals along a river bank. As illustrated in the Figure, it is preferable that when installed along both banks of a river, the units are staggered, such that at any point along the river only one river bank has a unit installed. This arrangement overcomes problems that might be encountered if units were to be installed directly opposite one another on each river bank, which might unacceptably reduce the navigable width of the river.

In the specific example described herein, apparatus 101 is configured as a hydro-electric generator in which the kinetic energy contained in the flow of a body of water, such as that of river 102, is converted into electrical energy. In particular, the apparatus 101 is configured to overcome a number of the problems associated with conventional hydro-electric generators, inasmuch that it generates electrical energy from the water flow with greater efficiency that generators of the prior art, and furthermore allows generation of multiple discrete electrical currents.

It will of course be appreciated however that the invention as defined in claim 1 is not necessarily limited in its utility to a hydro-electric generator. Rather, in alternative embodiments the invention might embody an alternative form of electrical generator, for example, a wind turbine, or even a generator driven by an internal combustion engine.

### Figures 2A, 2B & 2C

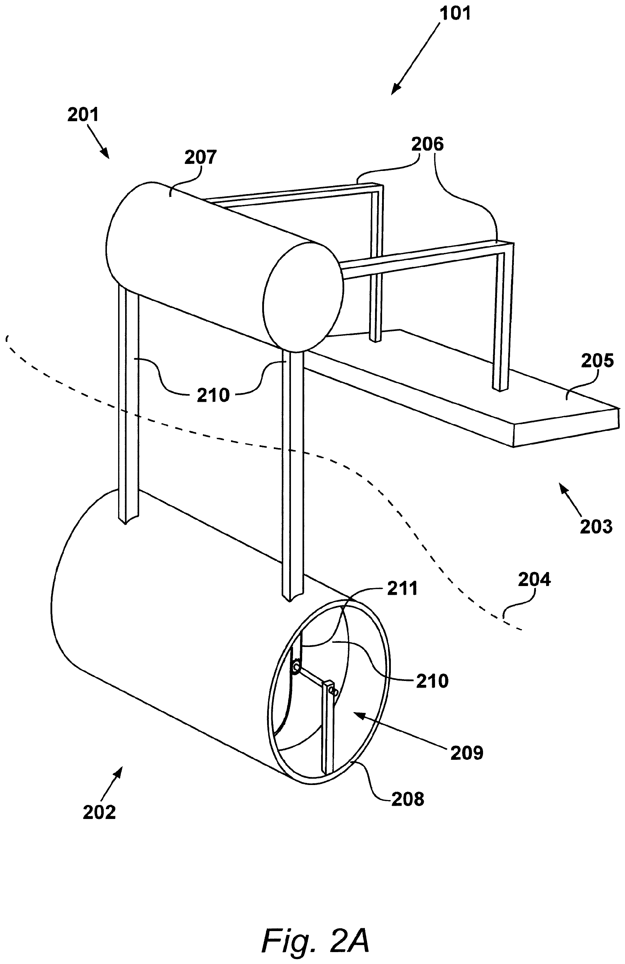

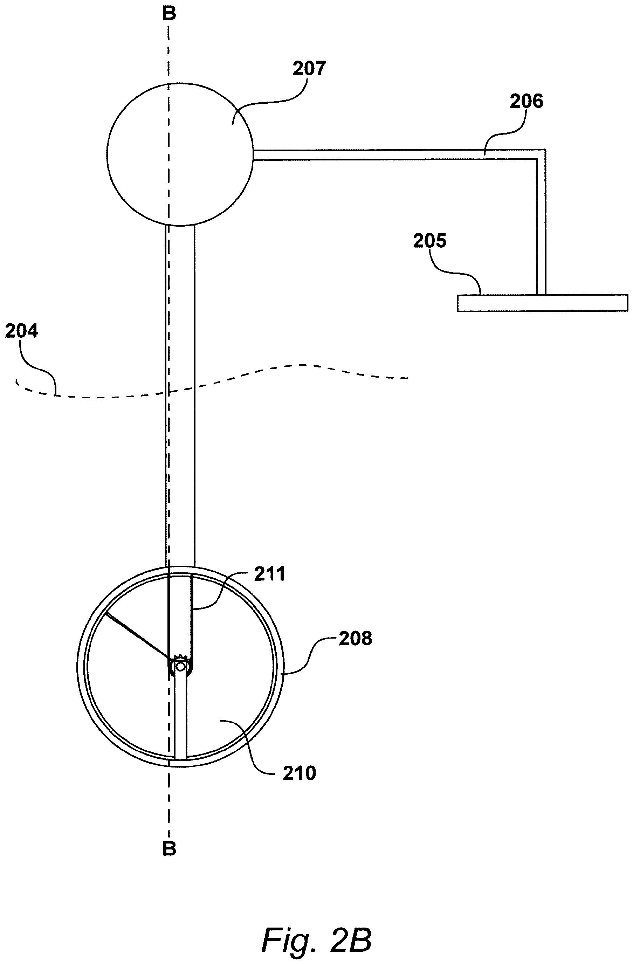

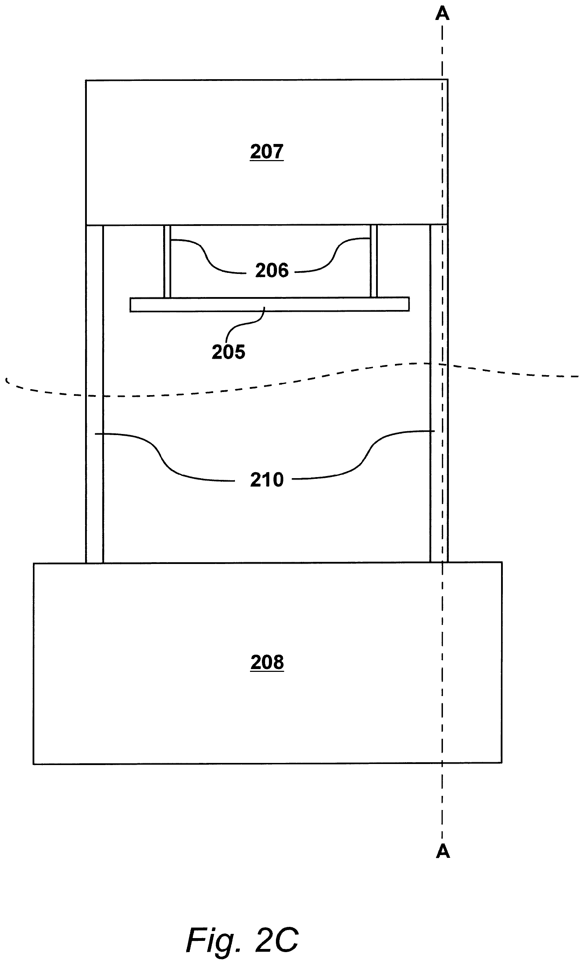

The apparatus for generating electricity, in this case, hydro-electric generator 101 previously described with reference to Figures 1A and 1B, is shown in Figures 2A, 2B and 2C in perspective, end and side elevation views respectively.

As illustrated in the Figures, in the example illustrated the apparatus 101 comprises a generating sub-assembly, indicated generally at 201, a turbine sub-assembly indicated generally at 202, and a support structure indicated generally at 203. As shown, the apparatus is configured for partial immersion in a body of flowing water up to water-line 204, such that the turbine sub-assembly is immersed, either partially or wholly, in a body of flowing water, and the generating sub-assembly is supported clear of the water above the water-line 204.

Support structure 203 comprises generally of a base portion 205 configured for attachment to an apparatus fixing point, for example, the river bank 102 in the example illustrated in Figures 1A and 1B. Support structure 203 further comprises a mast portion in the form of a pair of elongate elbow struts 206 which extend upwardly and outwardly of the base portion 205 and are attached at distal ends to the generator sub-assembly 201.

Said generator sub-assembly 201 comprises a housing 207 which houses the electrical components and circuitry for generating electricity, as will be described in further detail with reference to later Figures. As illustrated, housing 207 is generally cylindrical in shape and is configured to be substantially water and tamper-resistant in use. As previously described, housing 207 is attached to struts 206 to thereby secure the apparatus to an attachment point such as a ground surface.

As illustrated in the Figures, apparatus 101 further comprises a turbine sub-assembly indicated at 202, which sub-assembly comprises generally of a hollow open-ended cylindrical housing 208, housing a turbine rotor assembly (indicated generally at 209), which assembly 209, in the example, comprises an Archimedean screw 210

In the embodiment, said turbine sub-assembly further comprises a pair of hollows struts 210 which rigidly attach the turbine sub-assembly 202 to the generator sub-assembly 201. As described, in the embodiment said support structure is configured for attachment proximal base portion 205 to an attachment point, for example, a ground surface such as river bank 102, and is configured to support the generator sub-assembly 201 above the water-line 204 and support the turbine sub-assembly 202 below the water-line 204. In this way, turbine sub-assembly 202 is immersed in the flow of water, such as that of river 103, water is forced to flow through housing 208, thereby causing screw 210 of rotor assembly 209 to rotate. As will be described turbine sub-assembly 202 further comprises a drive mechanism coupling the screw 209 to the electricity generating equipment contained in generator sub-assembly 201. In the embodiment the drive mechanism comprises roller-chain 211.

In an alternative embodiment, said apparatus 101 may further comprise a turbine sub-assembly cage, in the form of wire mesh panels surrounding the turbine sub-assembly. Such a cage is useful to prevent foreign objects present in the flow of water from contacting or potentially becoming entangled with the rotor assembly 209 which could result in damage to the generator or could otherwise impede its operation.

Moreover, it will of course be appreciated by the skilled person that although the specific embodiment of the invention illustrated herein utilises an Archimedean screw as a rotor for converting the linear kinetic energy of the water flow into rotational kinetic energy, alternative embodiments of the invention may use alternative rotor assemblies. For example, in an alternative embodiment screw 209 might be substituted with a propeller.

### Figures 3A & 3B

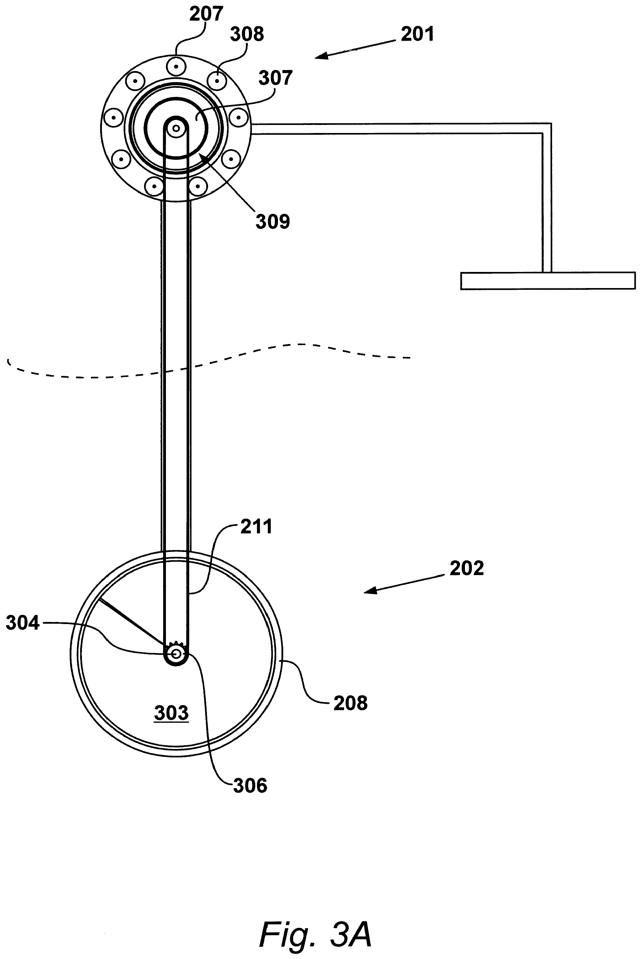

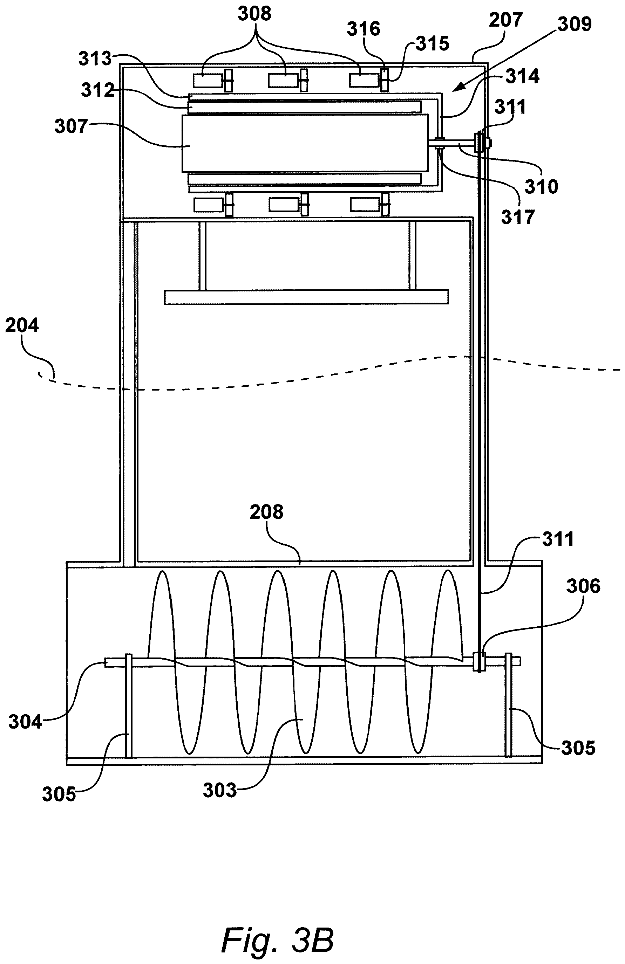

The hydro-electric generator apparatus 101 depicted in previous Figures is shown in Figures 3A and 3B in schematic partial cross-sectional views in Figures 3A and 3B through the lines A-A and B-B respectively.

As previously described, in the embodiment, said turbine sub-assembly 201 comprises a cylindrical housing 208 having open ends 301, 302 to allow the flow of water through the housing and across rotor assembly 209. In the example rotor assembly 209 comprises an Archimedean screw rotor 210, comprising a helical flighting 303 fixed about a central axle 304 defining an axis of rotation of the screw. Screw 210 is selected to have an appropriate dimension such that its outer diameter is closely matched to the internal diameter of said housing 208. Screw 210 is fixed to said housing 208 by fixing struts 305, each of which struts includes a roller bearing assembly at a distal end thereof. The axle 304 of screw 210 is thus received in the roller bearing assembly of each strut 305 to provide support to the screw within the housing 208 allowing rotation relative to the housing. Thus, as will be understood by the skilled person, the flow of water through the housing 208 will tend to cause rotation of screw 210 as water is incident on, and flows along, the helical flighting 303 contained by the housing 208.

Axle 304 is further provided with sprocket 306 rotationally coupled thereto. Sprocket 306 is configured to engage with roller chain 211, which roller chain extends upwardly through hollow strut 210 to the generator sub-assembly 201 as shown.

As illustrated, generator sub-assembly 201 comprises a cylindrical housing 207 defining internally a cylindrical cavity within which components and circuitry for generation of electrical current are housed. In the embodiment generator sub-assembly comprises primary electrical generator 307, a plurality of like secondary electrical generators 308, and an electric motor apparatus indicated generally at 309.

In the embodiment, said primary electrical generator 307 is an alternator comprising a rotor coupled to shaft 310. Shaft 310 comprises sprocket 311 rotationally coupled thereto, and roller chain 211 is run about said sprocket 311 to thereby operatively couple sprocket 311 to sprocket 306, allowing drive to be transmitted from screw 209 to shaft 310. Thus, as will be understood, rotation of screw 209 causes shaft 310 of primary electrical generator 307 to rotate, allowing generation of an alternating electrical current.

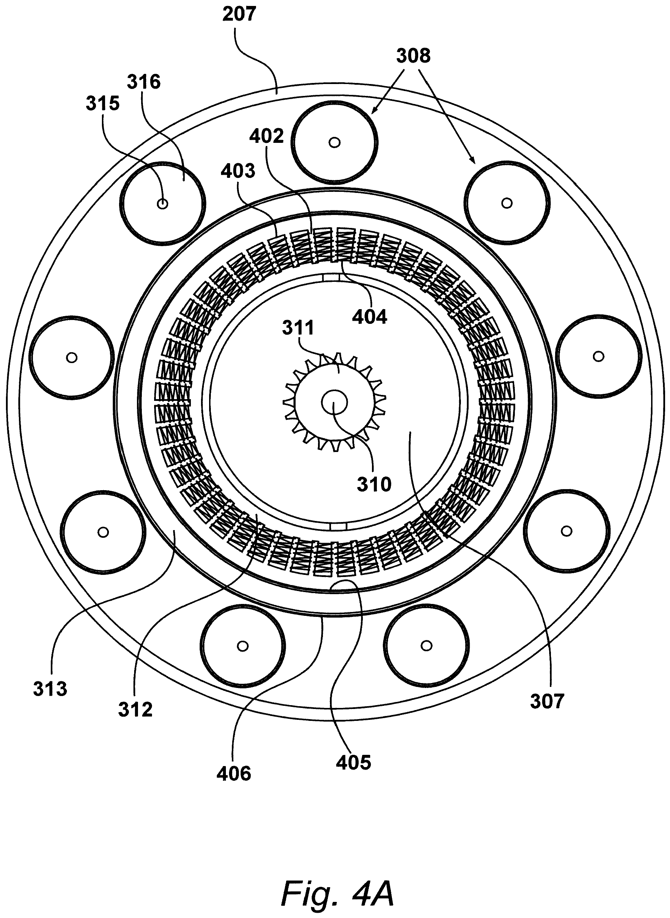

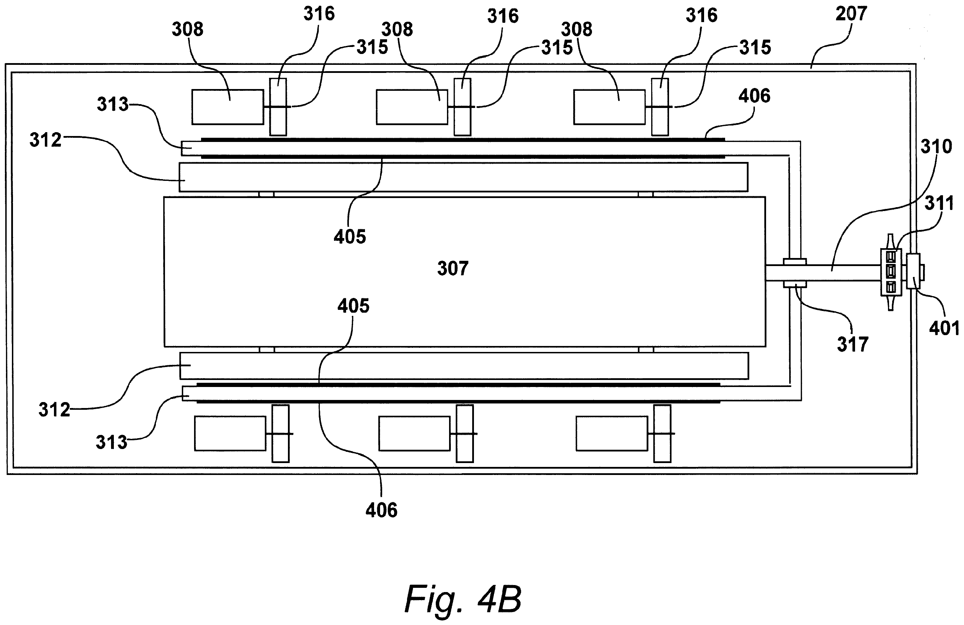

An output of primary generator 307 is connected to electric motor apparatus 309. As will be described further with reference to Figures 4a and 4b, in the embodiment, electric motor apparatus 309 is configured as an outer-rotor type AC induction motor. As shown, motor 309 comprises an annular stator core 312 defining a generally hollow cylindrical form arranged about, and rotationally coupled to, the casing of said primary generator 307. An annular rotor 313 is then provided about the stator core. Rotor 313 is again generally cylindrically shaped, with a closed end 314 which is rotatably coupled to shaft 310 by roller bearing 317, thus supporting the rotor 313 relative to the primary generator 307, and allowing rotation of the rotor 313 relative to the shaft 310. Thus, as will be described with reference to later Figures, energising of said stator core 312 with the alternating current from said primary generator 307 establishes a magnetic field about the stator core. The magnetic field in turn cause rotation of rotor 313 coaxial with shaft 310.

The plurality of like secondary electrical generators 308 are arranged about the rotor 313. In the embodiment, like secondary electrical generators 308 each comprise a direct current (DC) electrical generator comprising a rotor driven by a shaft 315. A wheel 316 is rotationally coupled to the shaft 315 of each like secondary generator 308, which wheel is configured to engage the outer circumferential surface of said rotor 313. Thus, rotation of said rotor 313 of the primary electrical generator 307 causes the wheel 316 of each said secondary generator 308 to rotate, thus driving the rotor of each secondary generator and resulting in the production of DC electrical currents by each secondary generator. As will be described, the outputs of each said secondary electrical generator may be aggregated for onward transmission or alternatively may be onwardly transmitted as individual electrical currents.

It will be appreciated that various modifications may be made to the construction of the apparatus 101 within the scope of the invention. For example, a number of different drive mechanisms to roller chain 211 are known by the applicant to be suitable. In an exemplary alternative embodiment roller chain 211 may be replaced with a toothed belt, or a v-belt, and accordingly sprockets 306, 311 may be replaced with belt rollers. As a further alternative, a shaft drive mechanism may be provided for transmission of torque from the screw 210 to the shaft 310.

### Figures 4A & 4B

The generator sub assembly is shown in close up views in Figures 4A and 4B. Figure 4A shows an end cross-sectional view of generator sub-assembly 201 generally along the line A-A identified previously with reference to Figure 2C with the end 314 of rotor 313 removed, and Figure 4B shows a side cross-sectional view of the generator sub-assembly generally along the line B-B identified in Figure 2B.

Referring to the Figures, primary generator 307 is housed centrally generally co-axially with the housing. As described, primary generator 307 includes a shaft 310 coupled to its rotor, which shaft carries a sprocket 311 rotationally coupled thereto. In the example, shaft 310 is received in a rolling bearing 401 secured to the end of wall of housing 207. In this way, primary generator 307 is supported by the end wall of housing 207 centrally in the cavity defined internally by the housing, and shaft 310 is allowed to rotate relative to housing 207. Primary generator 307 may be further provided with a connecting strut connecting the casing of the primary generator 307 to the housing 207, to provide further support the generator 307 and to prevent its rotation relative to housing 207. In a preferred embodiment a connecting strut may be rigidly attached to the casing of the primary generator 307 at its outer end opposite the outer end from which shaft 310 protrudes, and the connecting strut may then be rigidly attached to housing 207, thereby preventing rotation of generator 307 relative to housing 207.

As previously described, rotation of shaft 310 causes a rotor internal to primary generator 307 to rotate. In a manner that will be familiar to the skilled person, rotation of the rotor of primary generator 307 results in generation of an alternating electrical current.

Electrical current output from said primary generator 307 is used to power said motor apparatus 309. As previously described, motor apparatus 309 is generally of the form referred to as an outer-rotor type induction motor. Stator core 312 forms a concentric cylinder about the casing of primary generator 307 and may comprise of a plurality of stacked electrical steel plates. In a relatively conventional manner, a plurality of slots 402 may be defined by the stator core extending radially outwards towards the outer circumference of the plurality of stacked steel plates. In this way, the stator core may define generally an asterisk form when viewed end on as in Figure 4A, with teeth 403 extending radially outwardly. As illustrated in the Figures, stator core 312 is rotationally coupled to the casing of said primary generator 307 thereby supporting the stator core and preventing its rotation relative to the casing of primary generator 307 and housing 207.

Coils are formed about teeth 403 by winding conductive wire thereabout in order to produce a plurality of magnetic poles when energised by alternating current from said primary generator 307. As will be appreciated by the skilled person, the exact number of teeth 403, coils 404, and the division of coils 404 to different magnetic poles may be varied depending on the exact application of the unit. Typically, the stator 312 might define forty-eight teeth, such as teeth 403, supporting forty-eight coils 404, which coils may be allocated to eight magnetic poles, with each magnetic pole generated by six coils. Again, as will be appreciated by the skilled person, coils 404 may be created from a single winding, or alternatively might each comprise of primary and a plurality of secondary windings as is deemed advantageous. A preferred winding configuration is a salient-pole concentrated winding configuration.

In the embodiment, rotor 313 defines a generally cylindrical form and is arranged about the stator core 312. Rotor 313 is rotatably coupled to shaft 310 by bearing assembly 317 such that support is provided to the rotor 313 by the shaft 310, but the rotor may rotate still freely relative to the shaft 310. In the embodiment, rotor 313 comprises a generally cylindrical rotor conductor 405 installed about an inner circumference face of the rotor 313 so as to constitute a connected circuit. As the skilled person will be aware, rotor conductor 405 is thus configured so as to generate a torque by having a current induced in it by the coils 404.

Rotor 313 further comprises a generally cylindrical friction sleeve 406 installed about an outer circumference face of the rotor and rotationally coupled to the rotor. In the embodiment, sleeve 406 comprises a material which offers a high frictional resistance to the wheels 316 of secondary electrical generators 308, for example, a rubber type material.

As previously described, generator sub assembly further comprises a plurality of secondary electrical generators 308 disposed radially about the primary electrical generator 307 and the electric motor apparatus 309. In the specific embodiment, each said secondary electrical generator comprises a conventional direct current (DC) electrical generator comprising a rotor part coupled to shaft 315, which shaft comprises a wheel 316 rotationally coupled thereto. The peripheral edge of each said wheel 316 is configured to engage the outer circumference face of the electric motor rotor 313, such that rotation of rotor 313 causes rotation of wheel 316, which in turn causes each of said secondary electrical generators to generate DC electrical current.

From the foregoing description it will be appreciated by the skilled person that rotation of said screw 209 results in generation of an alternating electrical current by said primary generator 307. The alternating current from said primary generator 307 is used to energise the coils 404 of said electric motor stator core, so as to establish a rotary magnetic field. The rotary magnetic field established by the stator core induces a current in the rotor conductor 405, thereby generating a torque revolving the rotor conductor, and so the rotor 313 itself, according to Fleming's left hand rule. Rotation of the rotor 313 causes the wheels 316 of the plurality of secondary electrical generators to rotate, thereby resulting in generation of electrical current by each of the plurality of secondary electrical generators.

In the specific example illustrated, generator sub-assembly 201 comprises twenty-seven secondary electrical generators 308 arranged about the primary generator in nine rows of three generators. It will of course be appreciated however that in alternative embodiments greater or fewer secondary electrical generators 308 may be provided. Indeed, in a particular alternative embodiment of the invention, generator sub-assembly 201 is provided with one-hundred secondary electrical generators, arranged in ten rows of ten generators.

As will be understood, the electrical output from the plurality of secondary electrical generators may then be onwardly transmitted for use, for example, by being fed into the local grid electricity distribution system, in which case the electrical outputs from the plurality of secondary electrical generators 308 may be aggregated. As an alternative, and particularly if the apparatus 101 is to serve as a local electricity generator, the output of each said secondary electrical generator may be transmitted individually to electricity consuming devices. This latter arrangement has particular utility where different electrical outputs are required to operate different electricity consuming devices. For example, it may be desirable for the apparatus 101 to be able to supply both AC and DC electrical current simultaneously to different devices, in which case a portion of the array of secondary electrical generators may be AC electrical generators, whilst others in the array may be DC electrical generators.

## Claims

1. An apparatus for generating electricity, comprising:
a generator sub-assembly (201), said sub-assembly comprising:
a primary electrical generator (307) operable to generate an electrical current;
a plurality of secondary electrical generators (308), each of said plurality of secondary electrical generators (308) operable to generate an electrical current; and
an electric motor apparatus (309); **characterised in that**:
said primary electrical generator (307) is operable to supply electrical current to an input of said electric motor apparatus (309), which electric motor apparatus (309) is in turn operable to operate each of said plurality of secondary electrical generators (308).

2. The apparatus of claim 1, in which the power rating of said primary electrical generator (307) is greater than the power rating of each of said plurality of secondary electrical generators (308).

3. The apparatus of claim 1 or claim 2, in which said electric motor apparatus (309) comprises an outer-rotor type electric motor.

4. The apparatus of claim 3, in which said outer-rotor type electric motor (309) comprises an annular stator core (312) arranged about said primary electrical generator (307), and an annular rotor (313) housing disposed radially outwards with respect to the stator (312).

5. The apparatus of claims 1 to 4, in which each of said plurality of secondary electrical generators (308) comprise a drive wheel (316) rotationally coupled to a respective generator rotor (313).

6. The apparatus of claim 5, in which an outer circumferential surface of said rotor (313) housing is configured to engage an outer circumference face of respective drive wheels (316) of said plurality of secondary electrical generators (308).

7. The apparatus of claims 1 to 6, in which said electric motor apparatus (309) comprises an outer-rotor type alternating current induction motor.

8. The apparatus of claims 1 to 7, further comprising a turbine sub-assembly (202).

9. The apparatus of claim 8, in which said turbine sub-assembly (202) comprises a water-responsive rotor assembly (209).

10. The apparatus of claim 9, in which said water-responsive rotor (209) assembly comprises an Archimedean screw.

11. The apparatus of claim 9 or claim 10, in which said turbine sub-assembly (202) further comprises a drive mechanism (211) operatively coupled to an output shaft (304) of said rotor assembly (209) and operatively coupled to an input shaft (310) of said primary electric generator (307).

12. The apparatus of claim 11, in which said drive mechanism (211) comprises a roller chain.

13. The apparatus of claim 1 to 12, further comprising a support structure (203) for supporting said generator sub-assembly (201).

14. The apparatus of claims 1 to 13, in which said apparatus is configured as a hydro-electric generator.

15. The apparatus of claim 13 or claim 14, in which said support structure comprises a base portion (205) for attachment to a stable body, and a mast portion (206) extending from said base portion to support the generator sub-assembly (201) above a water-line and the turbine sub-assembly (202) below said a water-line.
